# EUROPEAN PATENT APPLICATION

(11) **EP 4 265 301 A1**
(43) Date of publication of application: **25.10.2023**
(21) Application number: 20965957.2
(22) Date of filing: 17.12.2020
(51) Int. Cl.: A62C 3/06, B60S 5/02

(54) **DISASTER PREVENTION EQUIPMENT FOR HYDROGEN STATION**

(71) Applicant: Hochiki Corporation, Shinagawa-ku, Tokyo 141-8660 (JP)
(72) Inventor: UMEHARA, Hiroshi, Tokyo 141-8660 (JP)
(74) Representative: Körfer, Thomas
(86) International application number: PCT/JP2020/047173
(87) International publication number: WO 2022/130569

(57) **Abstract**

[Problem] To improve safety, shorten the required safety distance from a road and a boundary to alleviate restrictions on a construction site and area, reliably protect against a nearby fire or the like, and avoid significant cost increase.

[Solution] A hydrogen station 10B is equipped with a dispenser 14 that supplies hydrogen to a vehicle. A sheet unfolding device 50 is arranged on the upper peripheral edge of the section to be protected that includes a dispenser installation area 14a, for example, on the peripheral edge of a roof 18 covering the dispenser 14, and holds a partition sheet 56 wound in a roll shape. When a fire occurs due to hydrogen leakage, the partition sheet 56 is unfolded by releasing the holding and dropping, the area around the section to be protected that includes the dispenser installation area 14a is partitioned, the release of flame and heat from the fire to the outside is suppressed, a fire extinguishing agent is sprayed from a fire extinguishing head 52 installed on the roof 18 side, and a cooling agent is sprayed from a coolant spraying head 62 to the sheet surface to enhance the flame-shielding property and heat-shielding property.

## Description

### [Technical Field]

The present invention relates to disaster prevention equipment for a hydrogen station in which a dispenser for supplying hydrogen to a vehicle is arranged.

### [Background Art]

As a technology to reduce the environmental load, the Japanese government policy has indicated the development and popularization of electric vehicles and fuel cell vehicles in place of gasoline vehicles that use fossil fuels, and eco-cars are expected to spread rapidly in society in the future. While the spread of charging facilities is essential as infrastructure for popularizing electric vehicles, the installation of hydrogen stations is essential for fuel cell vehicles.

Hydrogen stations include hydrogen stations equipped with hydrogen production equipment (on-site hydrogen stations) and hydrogen stations without hydrogen production equipment (off-site hydrogen stations). The off-site hydrogen station receives supply of hydrogen from a hydrogen production facility, an on-site hydrogen station, or the like, and stores it under pressure.

In addition, in order to promote the spread and expansion of hydrogen stations, the use of spaces adjacent to public roads, especially the establishment of gas stations, is considered as a particularly concrete path.

On the other hand, considering the danger of hydrogen, it is an important requirement to ensure the safety of nearby schools, hospitals, houses, etc. in the event of an accident. For this reason, hydrogen stations that have facilities for producing, storing, and handling hydrogen are generally required to install disaster prevention equipment such as gas detectors, flame detectors, and water spray equipment. In addition, disaster prevention devices such as emergency shutoff valves and temperature rise prevention devices should be installed in the event of a leakage accident. Furthermore, in consideration of the event that a fire breaks out, a safe distance from public roads and site boundaries is established.

Initially, the pressure for filling hydrogen cylinders was 40 MPa (vehicle filling pressure 35 MPa), and this safe distance was 6 m from the public road of the hydrogen equipment (eg dispenser) and 6 m from the site boundary. However, in order to extend the cruising (driving) distance with one full hydrogen filling, the pressure for filling hydrogen cylinders is currently increased to 82 MPa (vehicle filling pressure 70 MPa).

For this reason, a large amount of hydrogen should be stored and handled compared to the initial stage, and in consideration of the increased risk of accidents, the distance from the public road is 8m, and the distance from the site boundary is also 8m, which is long.

### [Related Art Documents]

### [Patent documents]

[Patent document 1]: JP-ANo. 2017-038789
[Patent document 2]: JP-ANo. 2017-032126
[Patent document 3]: JP-ANo. 2012-066086

### [Disclosure of Invention]

### [Problems to be Solved by the Invention]

However, in order to secure a safe distance for hydrogen stations, a considerable area of land is required. For this reason, it is particularly difficult to secure such facilities in urban areas such as the Tokyo metropolitan area, Chubu area, and Kinki area. Furthermore, in a hydrogen station with a refueling station (service station: SS) for gasoline or the like, ensuring a safe distance is a severe restriction condition for construction.

Furthermore, while the current disaster prevention equipment is mainly for fires in hydrogen stations and hydrogen leaks, fires at gasoline refueling stations in adjoining hydrogen stations, fires in the neighborhood, fires in the vicinity, etc. It is also necessary to protect hydrogen stations against car accidents and vehicle fires on public roads. From this point of view, the current disaster prevention equipment is not sufficient. However, construction of the hydrogen station requires several times the cost of construction of a refueling station such as gasoline. On top of that, the excessive installation of disaster prevention equipment becomes a hindrance in terms of cost, and cost reduction is also a major factor in promoting the spread.

An object of the present invention is to provide disaster prevention equipment for a hydrogen station to improve safety, shorten the required safety distance from a road and a boundary to alleviate restrictions on a construction site and area, reliably protect against a nearby fire or the like, and avoid significant cost increase.

### [Means to Solve the Problems]

### (Disaster prevention equipment for a hydrogen station)

The present invention is disaster prevention equipment for a hydrogen station, comprising:
a partition unit that encloses and partitions a predetermined protected area including an installation area of a dispenser that supplies hydrogen to a vehicle upon a predetermined abnormal event occurs; and
a first fire extinguishing unit that sprays a fire extinguishing agent in the protected section partitioned by the partition unit.

### (Control of disaster prevention equipment)

The first fire extinguishing unit sprays a fire extinguishing agent in the predetermined protected area upon hydrogen leakage or fire occurs in the predetermined protected area as the predetermined abnormal event.

### (Addition of cooling unit)

The present invention is further comprising a cooling unit that sprays a cooling agent to the partition unit that separates the predetermined protected area.

### (Control 1 of disaster prevention equipment with cooling unit)

Upon any of hydrogen leakage, fire, neighborhood fire or neighborhood accident in the predetermined protected area occurs as the predetermined abnormal event, the first fire extinguishing unit sprays fire extinguishing agent in the predetermined protected area, and the cooling unit cools the partition unit by spraying the cooling agent.

### (Control 2 of disaster prevention equipment with cooling unit)

Upon any of hydrogen leakage, fire, neighborhood fire, or neighborhood accident in the predetermined protected area occurs as the predetermined abnormal event, the cooling unit sprays the cooling agent to cool the partition unit.

### (Addition of the second fire extinguishing unit)

The present invention is further comprising a second fire extinguishing unit that sprays a fire extinguishing agent outside the predetermined protected area partitioned by the partition unit.

### (Control of disaster prevention equipment with the addition of the second fire extinguishing unit)

Upon any of hydrogen leakage, fire, neighborhood fire, or neighborhood accident in the predetermined protected area occurs as the predetermined abnormal event, the first fire extinguishing unit sprays extinguishing agent in the predetermined protected area, and the second fire extinguishing unit sprays extinguishing agent outside the predetermined protected area.

### (Disaster prevention equipment with the addition of the second fire extinguishing unit and cooling unit)

The present invention is further comprising,
a cooling unit that sprays a cooling agent to the partition unit that separates the predetermined protected area, and
a second fire extinguishing unit that sprays a fire extinguishing agent outside the predetermined protected area partitioned by the partition unit.

### (Control 1 of disaster prevention equipment with the addition of the second fire extinguishing unit and cooling unit)

Upon either a neighborhood fire or a neighborhood accident in the predetermined protected area occurs as the predetermined abnormal event, the second fire extinguishing unit sprays fire extinguishing agent on the outside of said predetermined protected area, and the cooling unit sprays cooling agent on the partition unit for cooling.

### (Control 2 of disaster prevention equipment with the addition of the second fire extinguishing unit and cooling unit)

Upon any of hydrogen leakage in the predetermined protected area, fire, neighborhood fire, or neighborhood accident occurs as the predetermined abnormal event, the first fire extinguishing unit sprays extinguishing agent in the predetermined protected area, and the second fire extinguishing unit sprays fire extinguishing agent outside the predetermined protected area, and the cooling unit sprays cooling agent on the partition unit for cooling.

### (Upward spraying unit)

The present invention is further comprising an upward spraying unit, wherein upon hydrogen leakage in the predetermined protected area occurs as the predetermined abnormal event, the upward spraying unit sprays a predetermined leakage hydrogen emission enhancing agent from the bottom to the top of the space in the predetermined protected area.

### (Alternating spraying of excretion accelerator for the leaking hydrogen and fire extinguishing agent by upward spraying unit)

Upon the concentration of leaked hydrogen satisfies a predetermined first concentration condition, spraying an the leakage hydrogen emission enhancing agent from an upward spraying unit into the predetermined protected area; upon the concentration of the leaked hydrogen satisfies a predetermined second concentration condition that is higher than the first concentration condition, stop spraying the the leakage hydrogen emission enhancing agent from the upward spraying unit, or spray the extinguishing agent from the first fire extinguishing unit into the predetermined protected area without stopping spraying from the upward spraying unit.

### (Alternating spraying of the leakage hydrogen emission enhancing agent and fire extinguishing agent by upward spraying unit)

The partition unit normally holds a partition sheet in a non-deployed state, and upon any of the hydrogen leakage, the protected area fire, the neighborhood fire, or the neighborhood accident occurs as the predetermined abnormal event, the partition sheet release the hold and deploy downward.

### (Discharge opening of partition sheet)

The partition sheet is arranged to provide a discharge opening above the predetermined protected area when unfolded.

### (Fire-retardant, fire resistance, etc. of the partition sheet)

The partition sheet has fire-retardant, fire resistance, or heat resistance, and further has heat shielding, flame shielding, or smoke shielding properties. Furthermore, the partition sheet is made of cloth.

### (Fire extinguishing water)

The fire extinguishing agent and the cooling agent are each used as fire extinguishing water.

### (Seat reinforcement structure with tubes filled with water on the edge of the seat)

The partition sheet is provided with tubes along the sheet side edge and/or the sheet bottom edge, and the tube is filled with water during or after deployment of the partition sheet to reinforce the partition sheet.

### (Switching spraying of the leakage hydrogen emission enhancing agent and fire extinguishing agent by the first fire extinguishing department)

The first fire extinguishing unit has a unit that sprays either or both of a predetermined the leakage hydrogen emission enhancing agent or the fire extinguishing agent in the predetermined protected area,
wherein upon hydrogen leakage in the predetermined protected area occurs as the predetermined abnormal event, the leakage hydrogen emission enhancing agent is discharged from the first fire extinguishing section into the predetermined protected area when the leaked hydrogen concentration satisfies a predetermined third concentration condition, and
wherein upon the leaked hydrogen concentration satisfies a predetermined fourth concentration condition higher than the third concentration condition, the extinguishing agent or the extinguishing agent and the leakage hydrogen emission enhancing agent are discharged from the first fire extinguishing unit into the predetermined protected area.

### (Switching spraying of the leakage hydrogen emission enhancing agent and fire extinguishing agent by the second fire extinguishing department)

The present invention is further comprising a second fire extinguishing unit that sprays either one or both of the leakage hydrogen emission enhancing agent and the fire extinguishing agent outside the predetermined protected area partitioned by the partition unit, wherein upon hydrogen leakage in the predetermined protected area occurs as the predetermined abnormal event and the leaked hydrogen concentration satisfies a predetermined third concentration condition, the excretion accelerator for said leaking hydrogen is discharged from the second fire extinguishing unit to the outside of the predetermined protected area, and herein upon the leakage hydrogen concentration satisfies a predetermined fourth concentration condition that is higher than the third concentration condition, the fire extinguishing agent or the extinguishing agent and the leakage hydrogen emission enhancing agent are sprayed outside the predetermined protected area from the second fire extinguishing unit.

### [Effects of the Invention]

### (Effects of the first invention)

The present invention is disaster prevention equipment for the hydrogen station, comprising the partition unit that encloses and partitions the predetermined protected area including the installation area of the dispenser that supplies hydrogen to the vehicle upon the predetermined abnormal event occurs; and the first fire extinguishing unit that sprays the fire extinguishing agent in the protected section partitioned by the partition unit. Therefore, when the abnormal event occurs in the hydrogen station or its vicinity, the protected area is partitioned by forming the partition so as to separate the protected area including the dispenser installation area from the surroundings. As a result, the abnormal event that occurs within the protected area is contained and its impact on the surroundings is suppressed. It also protects the inside of the protected area from abnormal events that occur outside the protected area.

In addition, the fire extinguishing unit sprays the first fire extinguishing agent within the protected area divided by the partition unit to suppress the spread of abnormal events that occur within the protected area. On the other hand, it is made less susceptible to abnormal events occurring outside the protected area. As a result, it becomes possible to shorten the required safe distance from roads and site boundaries, making it possible to ease restrictions on the construction of hydrogen stations.

### (Effect of control of disaster prevention equipment)

The first fire extinguishing unit sprays the fire extinguishing agent in the predetermined protected area upon hydrogen leakage or fire occurs in the predetermined protected area as the predetermined abnormal event. For this reason, when hydrogen leaks (before a fire) occur, the leaked hydrogen is promoted to be discharged to the outside, and filling of the inside is suppressed. In addition, the sprayed extinguishing agent cools the internal space, the dispenser, and the vehicle being filled with hydrogen, thereby suppressing the occurrence of fire (ignition, ignition).

Also, if the fire is within the protected area, the fire is suppressed, extinguished, or prevented from spreading, and the spread of the fire to the outside is suppressed.

### (Effect of adding and controlling cooling unit)

The present invention is further comprising the cooling unit that sprays the cooling agent to the partition unit that separates the predetermined protected area. For example, when any of hydrogen leakage, fire, neighborhood fire or neighborhood accident in the predetermined protected area occurs as the predetermined abnormal event, the first fire extinguishing unit sprays fire extinguishing agent in the predetermined protected area, and the cooling unit cools the partition unit by spraying the cooling agent. As a result, the partition unit is cooled and, for example, when the partition sheet is cloth, the gaps between the weaves of the partition sheet are filled with the cooling agent. Therefore, when the abnormal event is the fire, the partition unit is enhanced in fire prevention, fire resistance, and heat resistance to protect the partition, and also improve heat shielding, flame shielding, and smoke shielding properties. Therefore, the spread of fire to the outside and the leakage of smoke are suppressed. Similarly, if the abnormal event is a neighborhood fire or a neighborhood accident, it will prevent the fire from spreading from outside to the inside of the protected area. Also, spraying coolant on the partition unit will increase the weight of the partition unit, so the deployment state of the partition unit will be stable regardless of abnormal events.

### (Effect of upward spraying unit)

The present invention is further comprising the upward spraying unit, wherein upon hydrogen leakage in the predetermined protected area occurs as the predetermined abnormal event, the upward spraying unit sprays the predetermined leakage hydrogen emission enhancing agent from the bottom to the top of the space in the predetermined protected area. For this reason, the leaked hydrogen is efficiently discharged to the outside by the upward air current generated by spraying the extinguishing agent, and is quickly diluted to a concentration below the lower explosive limit.

### (Effect of controlling the upward spraying unit)

Upon the concentration of leaked hydrogen satisfies the predetermined first concentration condition, spraying the leakage hydrogen emission enhancing agent from the upward spraying unit into the predetermined protected area; upon the concentration of the leaked hydrogen satisfies a predetermined second concentration condition that is higher than the first concentration condition, stop spraying the leakage hydrogen emission enhancing agent from the upward spraying unit, or spray the extinguishing agent from the first fire extinguishing unit into the predetermined protected area without stopping spraying from the upward spraying unit. Therefore, when the hydrogen concentration is low, the fire extinguishing agent is not sprayed and water damage can be prevented. In addition, if the concentration does not decrease as a result of diluting the leaked hydrogen by spraying the leakage hydrogen emission enhancing agent, such as a leakage hydrogen emission enhancing gas, the fire extinguishing agent is sprayed to switch to a more reliable protection.

### (Effect of holding and unfolding divider sheets)

The partition unit normally holds the partition sheet in the non-deployed state, and upon any of the hydrogen leakage, the compartment fire, the neighborhood fire, or the neighborhood accident occurs as the predetermined abnormal event, the partition sheet release the hold and deploy downward. For this reason, since it is lighter than, for example, a fireproof shutter made of steel plate, it can be installed without strengthening the supporting structure such as the roof so much. In the case of a fire shutter, if there is an obstacle on the floor, the shutter will not come down to the floor and a gap will be created, reducing the effect of extinguishing the fire and preventing the spread of fire. However, since the partition sheet, which is made of cloth, is flexible, for example, if it is made longer, it is possible to suppress the occurrence of gaps, thereby suppressing the degree of reduction in extinguishing and preventing the spread of fire. Also, in the deployed state, the partition sheet facilitates the evacuation of persons, for example, from within the protected area.

### (Effect of discharge opening in partition sheets)

The partition sheet is arranged to provide the discharge opening above the predetermined protected area when unfolded. For this reason, the hydrogen leaked from the discharge openings in the upper part of the partition sheet that has been deployed is more efficiently discharged to the outside, and is quickly diluted to a concentration below the lower explosion limit.

### (Effects such as fire-retardant and fire resistance of the partition sheet)

The partition sheet has fire-retardant, fire resistance, or heat resistance, and further has heat shielding, flame shielding, or smoke shielding properties. Therefore, even if the temperature of the partition sheet becomes high due to a fire, the partition sheet will not burn even if the temperature becomes high due to its fire-retardant, fire resistance, or heat resistance. In addition, if the abnormal event is the protected area fire, the partition sheet blocks heat, flame, and smoke to prevent the fire from spreading to the outside and the smoke from leaking out. Also, if the abnormal event is the neighborhood fire or the neighborhood accident, it blocks heat, flames, and smoke to prevent the spread of fire and smoke from entering the protected area from the outside.

### (Effect of cloth partition sheet)

Since the partition sheet is made of cloth, the partition unit can be made flexible and lightweight, and the holding structure can be further simplified. Also, in the deployed state, it facilitates the evacuation of persons, for example, from within the protected compartment.

### (Effect of fire extinguishing water)

In addition, since fire extinguishing agent and coolant are used as fire extinguishing water, the equipment configuration is simplified by using fire extinguishing water as both extinguishing agent and cooling agent, and a sufficient amount of extinguishing agent and coolant can be sprayed.

### (Effect of seat reinforcement structure by filling tubes at the edge of the seat)

The partition sheet is provided with tubes along the sheet side edge and/or the sheet bottom edge, and the tube is filled with water during or after deployment of the partition sheet to reinforce the partition sheet. Therefore, the weight of the tube filled with water keeps the partition sheet in an unfolded state. ensure that the state can be maintained.

### (Effect of switching spraying of the leakage hydrogen emission enhancing agent and fire extinguishing agent by the first fire extinguishing unit)

The first fire extinguishing unit has the unit that sprays either or both of the predetermined leakage hydrogen emission enhancing agent or the fire extinguishing agent in the predetermined protected area, wherein upon hydrogen leakage in the predetermined protected area occurs as the predetermined abnormal event, the leakage hydrogen emission enhancing agent is discharged from the first fire extinguishing unit into the predetermined protected area when the leaked hydrogen concentration satisfies the predetermined third concentration condition, and wherein upon the leaked hydrogen concentration satisfies the predetermined fourth concentration condition higher than the third concentration condition, the extinguishing agent or the extinguishing agent and the leakage hydrogen emission enhancing agent are discharged from the first fire extinguishing unit into the predetermined protected area. Therefore, when the hydrogen concentration is low, the fire extinguishing agent is not sprayed and water damage can be prevented. In addition, if the concentration does not decrease as a result of diluting the leaked hydrogen by spraying the leakage hydrogen emission enhancing agent, such as the leakage hydrogen emission enhancing gas, the fire extinguishing agent is sprayed to switch to a more reliable protection.

### (Effect of switching spraying of the leakage hydrogen emission enhancing agent and fire extinguishing agent by second fire extinguishing unit)

The present invention is further comprising a second fire extinguishing unit that sprays either one or both of the leakage hydrogen emission enhancing agent and the fire extinguishing agent outside the predetermined protected area partitioned by the partition unit, wherein upon hydrogen leakage in the predetermined protected area occurs as the predetermined abnormal event and the leaked hydrogen concentration satisfies the predetermined third concentration condition, the leakage hydrogen emission enhancing agent is discharged from the second fire extinguishing unit to the outside of the predetermined protected area, and wherein upon the leakage hydrogen concentration satisfies a predetermined fourth concentration condition that is higher than the third concentration condition, the fire extinguishing agent or the extinguishing agent and the leakage hydrogen emission enhancing agent are sprayed outside the predetermined protected area from the second fire extinguishing unit. Therefore, when the hydrogen concentration is low, the fire extinguishing agent is not sprayed and water damage can be prevented. In addition, if the concentration of hydrogen leaked from the protected area is further diluted outside by spraying the leakage hydrogen emission enhancing agent, for example, the leakage hydrogen emission enhancing gas, and if the concentration does not decrease as a result of dilution by spraying the discharging promoting gas by the first fire extinguishing unit is switched to more reliable protection, for example by spraying extinguishing agent outside the protected space.

### [Brief Description of the Drawings]

Fig. 1 is an explanatory diagram showing a plan view of an equipment outline for the hydrogen station.
Figs. 2(A) and 2(B) are explanatory diagrams showing a first embodiment of the disaster prevention equipment of the hydrogen station.
Figs. 3(A) to 3(C) are explanatory diagrams showing an embodiment of the sheet unfolding device installed in the disaster prevention equipment of the hydrogen station.
Fig. 4 is an explanatory diagram showing the control system of the disaster prevention equipment of the hydrogen station of Figs. 2(A) and 2(B).
Figs. 5(A) and 5(B) are explanatory diagrams showing the operation of the disaster prevention equipment of the hydrogen station.
Figs. 6A and 6B are explanatory diagrams showing a second embodiment of disaster prevention equipment for the hydrogen station.
Fig. 7 is an explanatory diagram showing the control system of the disaster prevention equipment of the hydrogen station of Figs. 6(A) and 6(B).
Figs. 8(A) and 8(B) are explanatory diagrams showing a sheet unfolding device in which the tube for filling water is provided on the periphery of the sheet in a sheet unfolding state.
Figs.9(A) and 9(B) are explanatory diagrams showing the operation of the disaster prevention equipment of the hydrogen station provided with the sheet unfolding device of Figs. 8(A) and 8(B).
Fig. 10 is an explanatory view showing a sheet unfolding device having a discharge opening provided on the upper portion of the sheet in the sheet unfolding state.
Figs. 11(A) and 11(B) are explanatory diagrams showing the operating state of the disaster prevention equipment of the hydrogen station provided with the sheet unfolding device of Fig. 10 and spraying a fire extinguishing agent upward.
Figs. 12(A) to 12(E) are explanatory diagrams showing control patterns for abnormal events in disaster prevention equipment of a hydrogen station comprising the first fire extinguishing unit, the second fire extinguishing unit, and the cooling unit.

### [Mode for Carrying Out the Invention]

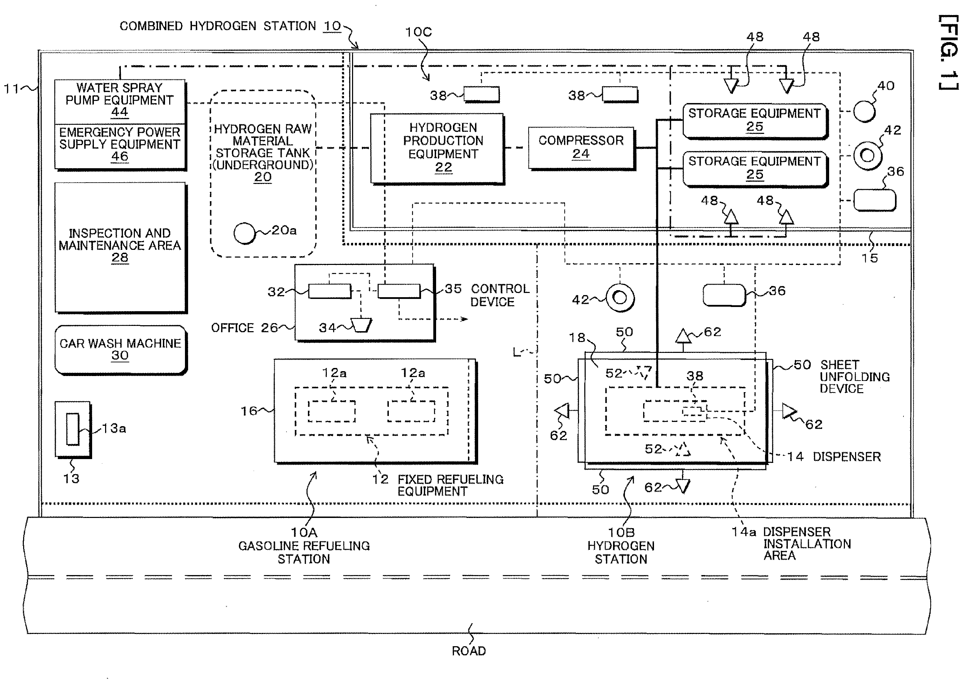

Fig. 1 is an explanatory diagram showing a plan view of the equipment of a combined hydrogen station. Note that a gasoline or other refueling station installed together with a hydrogen station is usually known as a service station (SS).

The basic concept of this embodiment is that when a predetermined abnormal event occurs in a hydrogen station 10B provided with a dispenser 14 that supplies hydrogen to a vehicle (fuel cell vehicle), the protected area is surrounded by a partition sheet to form a partition. Here, the protected area includes the setting area of the dispenser 14 (dispenser setting area 14a). That is, the partition is made so that the protected area is included in the partitioned area.

As a result, for example, if the abnormal event is a fire in a protected area (a fire in a area), the heat-insulating and flame-insulating properties of the partition sheet will prevent the fire from spreading to the surrounding area. In addition, the smoke-blocking properties of the partition sheet suppress the diffusion of smoke to the surrounding area, preventing contamination.

Also, for example, if the abnormal event is a nearby fire outside the protected area, similarly, the spread of fire from the nearby fire into the protected area is suppressed to protect, for example, the dispenser 14. In addition, since the partition sheet is a cloth, people can easily evacuate from the protected area.

The disaster prevention equipment of hydrogen station 10B sprays a fire extinguishing agent on the protected area surrounded by the partition sheet.

As a result, when the abnormal event is hydrogen leakage (before the fire), the discharge of hydrogen in the protected area to the outside is promoted and the filling of the inside is suppressed. In addition, by spraying the extinguishing agent from the bottom to the top of the protected area, the effect of discharging hydrogen to the sky from the upper opening of the protected area is enhanced, and the concentration is quickly diluted to below the lower explosive limit. In addition, leakage and filling of the surrounding area is effectively suppressed. In addition, the extinguishing agent cools the interior area and the vehicle during dispenser and hydrogen filling to suppress the occurrence of fire (ignition).

Also, if the abnormal event is a fire within the protected area, the fire within the protected area is extinguished, suppressed, or prevented from spreading, and the spread of the fire to the outside is suppressed. At this time, since the protected area is partitioned with the partition sheet, the escape of the fire extinguishing agent to the outside is suppressed, and the fire extinguishing agent is efficiently sprayed inside the protected area to increase the fire extinguishing efficiency.

Also, if the abnormal event is a neighborhood fire or a neighborhood accident, the same action as above prevents the fire from spreading from the outside into the protected area.

Moreover, the disaster prevention equipment of the hydrogen station 10B sprays a cooling agent such as cooling water on the partition sheet that divides the protected area.

As a result, the partition sheet is cooled, and the gaps between the weaves of the partition sheet, which is cloth, are closed with the cooling water. Therefore, when the abnormal event is the fire in the protected area, the partition sheet is protected from fire, fire resistance, and heat resistance, and deterioration of the partition state is prevented. In addition, since the heat shielding, flame shielding and smoke shielding properties are improved, the spread of fire and smoke to the outside is suppressed. Similarly, if the abnormal event is a neighborhood fire or a neighborhood accident, prevent the spread of fire and smoke from the outside into the protected area. In addition, spraying cooling water on the partition sheet increases the weight of the partition sheet, so the unfolded state of the partition sheet is stabilized regardless of abnormal events.

The disaster prevention equipment of the hydrogen station 10B combines the formation of the partitioned protected area, the spraying of the extinguishing agent, and the spraying of the cooling agent. As a result, the above-described synergistic effect can be optimally obtained for the occurrence of various abnormal events.

With such a simple configuration, the protected area can be protected more effectively and efficiently than before, and the surroundings can also be protected, so the required safety distance can be shortened.

Here, the protected area of the hydrogen station 10B enclosed and partitioned by the partition sheet is the partition (three-dimensional space area) including at least an area where the dispenser 14 for supplying hydrogen to the vehicle is installed. Also, any area in the hydrogen station 10B can be set as the protected area as long as it includes the dispenser installation area 14a.

Also, the partitioned area is a area that includes the protected area, but it may be the same area as the protected area. Also, there may be a plurality of protected areas. Moreover, the number of dispensers installed in one protected area is arbitrary. A detailed description will be given below.

### [Overview of hydrogen stations]

In Fig. 1, the combined hydrogen station 10 has a premises surrounded by firewalls 11 on three sides, excluding the part facing the road, with a boundary L between the gasoline refueling station (service station: SS) 10A and the hydrogen station 10A. The fixed refueling equipment 12 or the like is installed at the gasoline or the like refueling station 10A, and the dispenser 14 or the like is installed at the hydrogen station 10B.

This embodiment takes as an example the hydrogen station (on-site type hydrogen station) 10B equipped with hydrogen production equipment. A building partitioned by a fire wall 15 on the depth side of the site is designated as a hydrogen production area 10C, in which a hydrogen production device 22, a compressor 24 and a storage facility 25 are installed. A raw fuel of hydrogen is injected from an inlet 20a into a raw fuel tank 20 installed underground and stored. The hydrogen production device 22 takes in the raw fuel from the raw fuel tank 20 to produce hydrogen, compresses it to a predetermined pressure with the compressor 24, and stores it in the storage facility 25. The storage facility 25 sends hydrogen to the dispenser 14 so that hydrogen can be supplied to a fuel cell vehicle (FCV) by, for example, 70 MPa differential pressure filling.

On the other hand, at the gasoline refueling station 10A, a refueling stand 12a of the fixed refueling facility 12 can refuel a gasoline vehicle or the like with gasoline. In addition, an oil supply stand 13a of a fixed oil supply equipment 13 is capable of injecting kerosene into a plastic tank or the like. Furthermore, an office 26, an automobile inspection and maintenance area 28, and a car wash machine 30 are provided.

The fixed refueling equipment 12 installed at the refueling station 10A for gasoline or the like is provided with a roof 16 so as not to be exposed to rainwater. Also, the dispenser 14 installed in the hydrogen station 10B is also provided with a roof 18 so as not to be exposed to rainwater. The roof 18 of the dispenser 14 has a ventilating structure in which rainwater from above does not pass through, but air from below escapes upwards, in order to diffuse the leaking and rising hydrogen into the atmosphere.

### [Overview of disaster prevention equipment]

In this embodiment, the hydrogen station 10B is provided with disaster prevention equipment including fire alarm equipment.

The fire alarm equipment connects a fire detector 34 installed in the office 26 to a sensor line pulled out from a fire receiver 32 provided in the office 26, and sends a fire alarm signal from the fire detector 34 to the fire receiver 32 receives it and outputs a fire alarm, and also outputs a transfer signal to other equipment.

The disaster prevention equipment installs a plurality of water spray heads 48 with the storage equipment 25 installed in the hydrogen production area 10C as the object of protection. A water spray pump equipment 44 installed at the gasoline or the like refueling station 10A can supply fire-extinguishing water as a fire-extinguishing agent by connecting a water supply pipe to a water spray head 48. An emergency power supply facility 46 is installed for the water spray pump equipment 44 as a countermeasure against power failure.

Fire-extinguishing water spraying from the water spray head 48 by starting the water spray pump equipment 44 is controlled by a control device 35 installed in the office 26. The control device 35 connects a flame detector 36, a hydrogen detector 38, a temperature detector 40 and a starting device 42 installed in the hydrogen station 10B and the hydrogen production area 10C by signal lines. Also, the flame detector 36 and the activation device 42 are installed, for example, on the ceiling or the post near the dispenser 14, and the hydrogen detector 38 is installed inside the housing of the dispenser 14.

The control device 35 detects fire by the flame detector 36, detects hydrogen by the hydrogen detector 38, detects a predetermined temperature by the temperature detector 40, operates the starting device 42, or receives a fire alarm signal from the fire receiver 32. is determined, a pump start signal is output to the water spray pump equipment 44 to start the pump, pressurized fire extinguishing water is sprayed from the water spray head 48 to the storage equipment 25, and the storage equipment 25 is cooled by fire protect from heat. Although not shown, fire extinguishers are placed at predetermined locations in the combined hydrogen station 10.

### [First embodiment of disaster prevention equipment for the hydrogen station]

### (Equipment configuration overview)

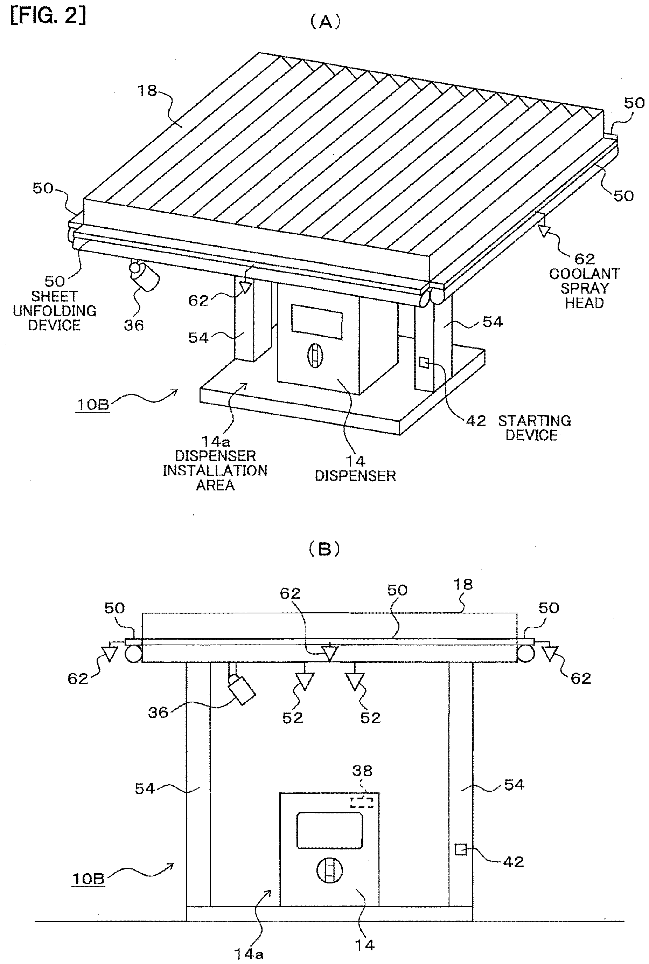

Figs. 2(A) and 2(B) are an explanatory view showing a first embodiment of disaster prevention equipment for the hydrogen station according to the present invention, showing the hydrogen station 10B taken out from Fig 1. Note that Fig. 2(A) shows a perspective view, and FIG. 2(B) shows a front view.

The dispenser 14 is installed in the hydrogen station 10B, and hydrogen is sent from the storage equipment 25 as shown in Fig. 1 to the dispenser 14 so that hydrogen can be supplied to the fuel cell vehicle (FCV) through a hose with a nozzle (not shown) for charging.

Here, in the present embodiment, the dispenser 14 contains various constituent devices for supplying and filling hydrogen in the fuel cell vehicle (FCV) in a housing, and further includes a hose with a nozzle and an operation display unit. The hydrogen detector 38 is also disposed within the housing of the dispenser 14.

A roof 18 having a well-known ventilation structure is installed on the top of the dispenser 14 by means of struts 54. In this embodiment, a sheet unfolding device 50 is installed on each of the four sides of the roof 18, and a coolant spraying head 62 for spraying cooling water is provided.

The sheet unfolding device 50 is activated by a control signal from the control device 35 shown in FIG. 1 when a predetermined abnormal event such as hydrogen leakage, protected area fire, neighborhood fire, or neighborhood accident occurs. The activated sheet unfolding device 50 drops and unfolds the partition sheet, which is wound and held in a normal state, to surround the protected area including the dispenser installation area 14a on the lower side of the roof 18 on all sides, then, the protected area is partitioned to form the partition area.

A fire extinguishing head 52 is arranged substantially in the center of the ceiling surface (lower surface of the roof 18) of the dispenser 14, and fire extinguishing water supplied from the water spray pump equipment 44 shown in FIG. 1 can be sprayed. Also, the flame detector 36 is installed on the ceiling side, the starting device 42 is installed on the strut 54, and the hydrogen detector 38 is installed inside the dispenser 14.

### (sheet unfolding device)

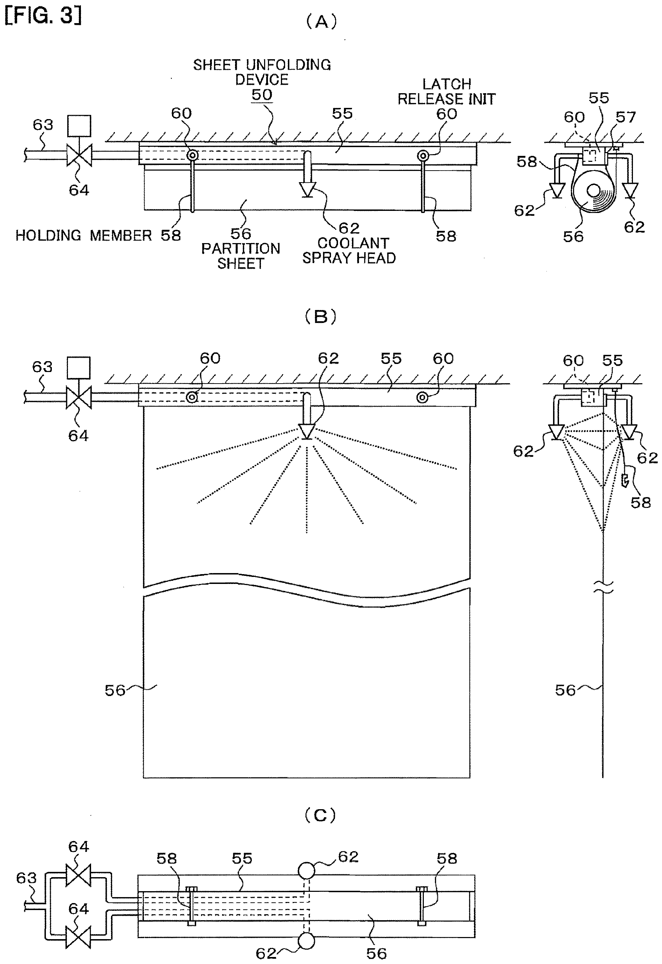

Figs. 3(A), 3(B), and 3(C) are explanatory diagrams showing an embodiment of the sheet unfolding device installed in disaster prevention equipment of the hydrogen station. Note that Fig.3(A) shows the normal state, Fig. 3(B) shows the unfolded state of the partition sheet, and Fig. 3(C) shows a plan view from below.

In Fig. 3(A), the sheet unfolding device 50 has a device main body 55 fixed to the upper peripheral edge of the protected area. Specifically, the device main body 55 is fixed to the eaves side which is the peripheral portion of the roof provided to cover the upper portion of the dispenser 14. The device main body 55 fixes one end side of the partition sheet 56 with a sheet fixing unit 57. At this time, the partition sheet 56 is wound in a roll and is held in a suspended state at two positions on the left and right by a holding member 58 using a wire or a rope below the device main body 55.

The partition sheet 56 is a cloth that has fire resistance, fire resistance, or heat resistance, and further has flame-blocking properties to block flames, heat-blocking properties to block heat, or smoke-blocking properties to block smoke. The partition sheet 56 is also called a fireproof sheet, a fireproof curtain, a fireproof curtain, or the like. As the partition sheet 56, even if the heat resistance is 1200° C. or less, it is sufficient if it has heat resistance of, for example, several hundred degrees or more.

The holding member 58 is the wire or the rope, one end of which is fixed to the device main body 55 and the other end of which is detachably held by a latch release unit 60 of the device main body 55 through the lower side of the partition sheet 56 wound into a roll. Normally, the holding member 58 is retained. The latch release unit 60 releases the latch by, for example, energizing a solenoid according to a control signal from the control device 35 shown in Fig.1.

When the sheet unfolding device 50 activates the latch releasing unit 60 in response to a control signal from the control device 35, the holding of one end of the holding member 58 is released. Therefore, as shown in Fig. 3(B), the partition sheet 56 is dropped by its own weight while one end side of the partition sheet 56 is fixed to the device main body 55 and is spread downward.

In this way, the four sheet unfolding devices 50 shown in Fig. 2(A) are operated to unfold the four partition sheets 56 to form a partition, and the protected area can be surrounded by the partition.

Here, the length of the partition sheet 56 unfolded as shown in Fig. 3(B) is cut longer than the installation height of the sheet unfolding device 50. Therefore, even if an object is placed on the road surface, which is the lower surface of the protected area, it is difficult to create a gap due to the slack of the seat when it is dropped and deployed.

The sheet unfolding device 50 may have a structure in which the partition sheet 56 is wound around a rotating shaft and the partition sheet 56 is unlatched by its own weight by releasing the latch of the rotating shaft. Alternatively, a structure may be employed in which the partition sheet 56 of the sheet unfolding device 50 is held in a state of being folded into a bellows shape, and released to drop and unfold.

Further, the holding of the partition sheet 56 in the sheet unfolding device 50 is released by a control signal from the control device 35, but may be of a heat-sensitive type using a fusible link that releases the holding by fusing a fuse that receives heat from a fire. Also, a composite type in which each method is combined depending on the application, scale, and shape may be used.

### (Coolant spraying head)

In Figs. 3(A) to 3(C), the sheet unfolding device 50 is provided with coolant spraying heads 62 in pipes taken out from both sides of the device main body 55 (both sides of the unfolded partition sheet 56). A water supply pipe 63 is connected to the coolant spraying head 62 via an on-off valve 64 through the device main body 55. The coolant spraying head 62 is supplied with fire-extinguishing water from the water spray pump equipment 44 shown in Fig. 1. Therefore, as shown in Fig. 3(B), fire-extinguishing water is sprayed substantially uniformly as a cooling agent on both sheet surfaces of the protected area surrounded by the unfolded partition sheet 56.

Moreover, the partition sheet 56 has a textured surface coated with a resin or the like and a non-coated textured surface. When the non-coated partition sheet 56 is used, the cooling water sprayed from the coolant spraying head 62 wets both sides of the unfolded partition sheet 56, and the sprayed cooling water impregnates the partition sheet 56 having a fabric texture structure, then run down along both sheet surfaces. Such cooling water impregnation and running down along the sheet surface close the gaps in the texture of the partition sheet 56, improving the sealing performance. Therefore, for example, hydrogen is suppressed from diffusing to the outside of the partition sheet 56 when hydrogen leaks from the dispenser 14. In addition, the partition sheet 56 is cooled by impregnation of cooling water and flowing down along both sheet surfaces, and fire-retardant, fire resistance, heat resistance, flame barrier and heat barrier properties are enhanced. Also, in the case of fire, the smoke barrier is enhanced.

In addition, cooling water is sprayed on the inner side of the sheet surface (the sheet surface facing the inside of the protected area) or the outside (the sheet surface facing the outside of the protected area) of the unfolded partition sheet 56. Alternatively, cooling water may be sprayed both inside and outside the seat surface.

### (Control system)

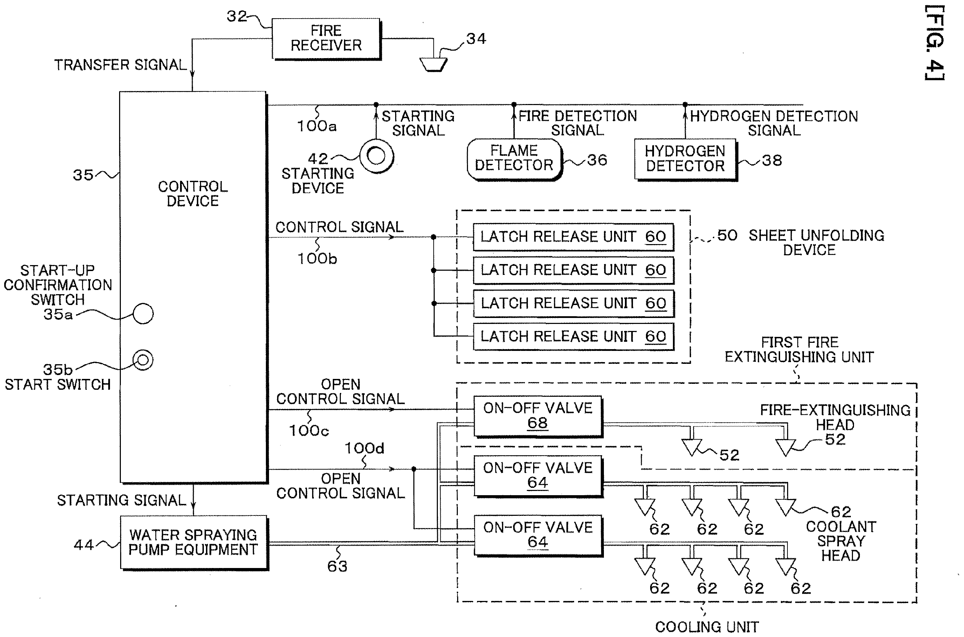

Fig. 4 is an explanatory diagram showing the control system for the disaster prevention equipment of the hydrogen station in Fig. 1. In Fig. 4, the control device 35 functioning as a control unit is connected by a signal line 100a to terminals including the flame detector 36, the hydrogen detector 38 and the starting device 42 installed in the protected area. Therefore, the control device 35 monitors abnormal events in the protected area including hydrogen leakage from the dispenser 14.

Further, the control device 35 connects the latch release unit 60 of the sheet unfolding device 50 installed around (periphery) the roof 18 covering the dispenser 14 by the signal line 100a, and releases the latch of the holding member 58 by the control signal from the control device 35, and the partition sheet 56 can be expanded.

The control device 35 connects the on-off valve 68 with a signal line 100c, and opens the on-off valve 68 in response to an open control signal from the control device 35. Therefore, the water spray pump equipment 44 supplies fire-extinguishing water to the fire-extinguishing head (first fire-extinguishing head) 52 installed on the ceiling side of the dispenser 14 via the water supply pipe 63 so that the water can be sprayed. The fire extinguishing head 52 and the on-off valve 68 constitute a first fire extinguishing area.

Further, the control device 35 connects the on-off valve 64 with a signal line 100d so as to individually cool the inner surface and the outer surface of the partition sheet 56, and the on-off valve 64 is opened by an open control signal from the control device 35. Therefore, the water spraying pump equipment 44 supplies the fire extinguishing water to the sheet unfolding device 50 through the water supply pipe 63, and can be sprayed from the coolant spraying heads 62 separately provided inside and outside. The coolant spray head 62 and the on-off valve 64 constitute a cooling unit.

The fire extinguishing unit (first extinguishing unit) and the cooling unit are, in a broad sense, a concept that includes the water spray pump equipment 44 and associated equipment such as piping. This point also applies to the second fire extinguishing unit described later.

### [Control operation of disaster prevention equipment for the hydrogen station]

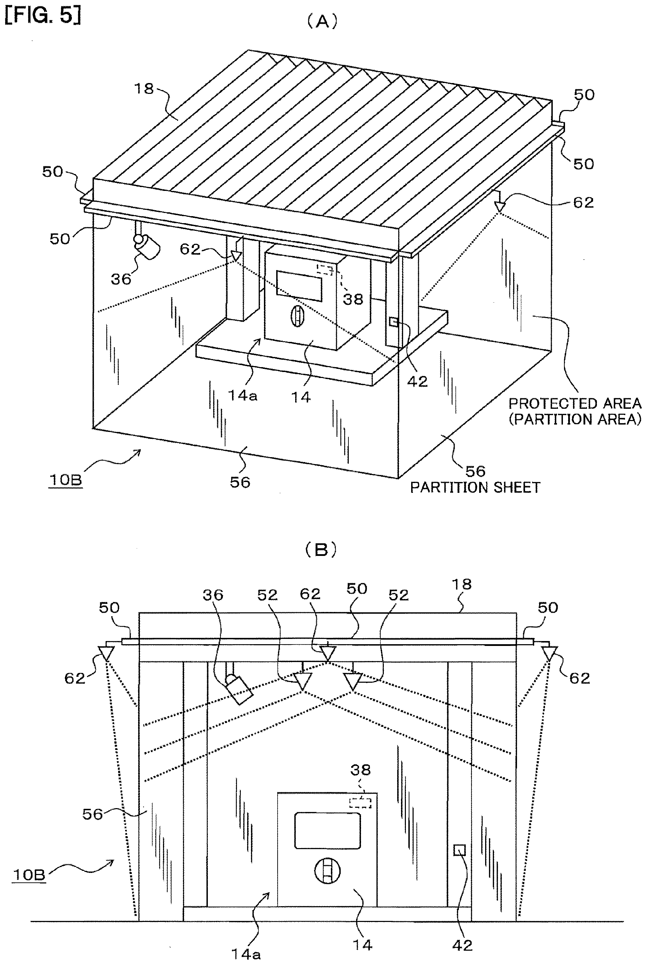

Figs. 5(A) and 5(B) are an explanatory diagram showing the operation of disaster prevention equipment for the hydrogen station. Here, Fig. 5(A) shows a perspective view, Fig. 5(B) shows a front view, and further, the partition sheet is shown in a see-through state to facilitate understanding of the inside of the expanded partition sheet.

The control of the disaster prevention equipment for the hydrogen station by the control device 35 is divided into, for example, the following hydrogen leakage mode, fire occurrence mode, and peripheral mode. Here, the hydrogen leakage mode is a control mode when hydrogen leakage from the dispenser 14 occurs. Also, the fire occurrence mode is a control mode when a fire (compartment fire) occurs inside the protected area including the dispenser 14. Furthermore, the peripheral mode is the control mode when a neighborhood fire or neighborhood accident occurs outside the protected area. In addition, the fuel leakage (before the fire) at the refueling station 10A such as gasoline may be included in the neighborhood fire or may be included in the neighborhood accident.

### (Hydrogen leak mode)

As control of the hydrogen leakage mode, when the control device35 receives a hydrogen detection signal due to hydrogen leakage from the hydrogen detector 38 provided inside the housing of the dispenser 14, the control device35 transmits a control signal to the latch releasing unit 60 of the sheet unfolding device 50 provided on the four sides of the roof 18 of the dispenser 14. Therefore, the holding member 58 is unlatched and the partition sheet 56 is dropped and deployed to form a partition surrounding the protected area under the roof 18 including the dispenser installation area 14a.

Subsequently, the control device 35 outputs a start signal to the water spray pump equipment 44 to start the pump operation, and transmits an open control signal to the on-off valve 68. Therefore, the water spray pumping equipment 44 supplies fire extinguishing water to the fire extinguishing head 52. Therefore, the protected area including the dispenser installation area 14a where the dispenser 14 that is leaking hydrogen from the fire extinguishing head 52 is installed is cooled by spraying fire extinguishing water to diffuse the hydrogen gas, thereby suppressing the explosion due to ignition of hydrogen. In addition, by spraying fire extinguishing water on the protected area, the leaked hydrogen is diluted upward and discharged to the outside through the roof 18 having a ventilation structure and diffused, thereby suppressing and preventing hydrogen explosion.

It should be noted that user operates the starting device 42 when hydrogen leakage occurs during hydrogen filling into the vehicle. The control device 35 receives an activation signal from the starting device 42 and notifies an abnormality alarm. A staff member of the station, who has learned of hydrogen leakage from the abnormal alarm, performs a predetermined start-up confirmation operation on the control device 35, for example, operates a start-up confirmation switch 35a provided on the control device 35. Therefore, the same disaster prevention equipment control operation as when the control device 35 receives the hydrogen detection signal is performed.

Further, when hydrogen leakage occurs, cooling of the unfolded partition sheet 56 is not essential, so cooling water is not sprayed from the coolant spraying head 62. However, when the non-coated partition sheet 56 is used, cooling water is sprayed in order to prevent the leaked hydrogen from diffusing to the surroundings, in particular, from igniting due to leakage to the refueling station 10A side of gasoline or the like. As a result, the partition sheet 56 may be impregnated with cooling water to improve the airtightness.

In the case where the cooling agent spraying head 62 is arranged to spray the coolant onto the inner sheet surface of the partition sheet 56, the cooling agent may be sprayed from the cooling agent spraying head 62 when hydrogen leaks. This serves the purpose of facilitating the discharge of leaked hydrogen out of the protected area and diluting the concentration of hydrogen within the protected area.

### (Fire occurrence mode)

When the control device 35 receives a fire detection signal from the flame detector 36 indicating that a fire of hydrogen leaked from the dispenser 14 has been detected, the control device 35 transmits a control signal to the latch release units 60 of the sheet unfolding devices 50 provided on the four sides of the roof 18. Therefore, the latch of the holding member 58 is released, and the partition sheet 56 is dropped and deployed to form a partition so as to surround the protected area under the roof 18.

Subsequently, the control device 35 outputs a start signal to the water spray pump equipment 44 to start the pump operation as control of the fire occurrence mode, and also transmits an open control signal to open the on-off valve 68. Accordingly, the water spraying pump equipment 44 supplies fire-extinguishing water to the fire-extinguishing head 52, sprays the fire-extinguishing water on the protected area where the dispenser 14 causing the fire is installed, and suppresses the fire.

Also, the control device 35 transmits an open control signal to open the on-off valve 64. Accordingly, the water spray pump equipment 44 supplies fire-extinguishing water to coolant spray heads 62 provided on both sides of the partition sheet 56 to spray cooling water on the inside and outside of the sheet surface of the unfolded partition sheet 56. Therefore, the fire-retardant, fire resistance, heat resistance, flame shielding, heat shielding, flame shielding, and smoke shielding properties of the partition sheet 56.

### (Peripheral mode)

The peripheral mode is the control action when there is a neighborhood fire. Neighborhood fires include vehicle accidents and gas leakage accidents (neighborhood accidents) on public roads or in the neighborhood of the hydrogen station 10, fires at the gasoline refueling station 10A, house fires, vehicle fires (neighborhood fires), and the like. In the control operation of the peripheral mode, when the station staff judges that the danger of the hydrogen station 10B due to a nearby fire has increased, for example, the start switch 35b provided in the control device 35 is operated to perform the control operation of disaster prevention equipment.

When the control device 35 is operated to activate, a control signal is transmitted to the latch release units 60 of the sheet unfolding devices 50 provided on the four sides of the roof 18. Therefore, the latch of the holding member 58 is released to drop and deploy the partition sheet 56 to form a partition so as to surround the protected area under the roof 18.

Subsequently, the control device 35 outputs a start signal to the water spray pump equipment 44 to start pump operation, and also transmits an open control signal to open the on-off valve 64. As a result, the water spray pump equipment 44 supplies fire-extinguishing water to coolant spray heads 62 provided on both sides of the partition sheet 56. Therefore, cooling water is sprayed on the inside and outside of the sheet surface of the unfolded partition sheet 56 to enhance the fire retardant, fire resistance, heat resistance, flame barrier, heat barrier and smoke barrier properties of the partition sheet 56 against neighboring fires. Thus, the protected area is reliably protected from neighboring fires. Here, depending on the improvement of the smoke-blocking property, it is possible to more effectively prevent contamination caused by smoke and damage to the human body. In addition, it is possible to effectively prevent response activities from being hindered due to reduced visibility due to smoke.

Furthermore, when the fire in the neighborhood spreads and the risk of fire increases, a predetermined manual operation of the control device 35 to open the on-off valve 68, for example, a manual fire switch (not shown) provided in the control device 35). As a result, the water spray pump equipment 44 supplies fire extinguishing water to the fire extinguishing head 52, sprays the fire extinguishing water on the protected area to cool it, enhances the fire retardant, fire resistance, flame shielding and heat shielding properties of the partition sheet 56. Thus, ensure protection against neighborhood fires.

In addition, when multiple abnormal events such as hydrogen leakage, fire in the protected area, and abnormal events in the surrounding area (neighborhood fire, neighborhood accident) occur at the same time, disaster prevention equipment control that combines the control mode corresponding to the abnormal event that occurred take action.

### [Second embodiment of disaster prevention equipment for hydrogen station]

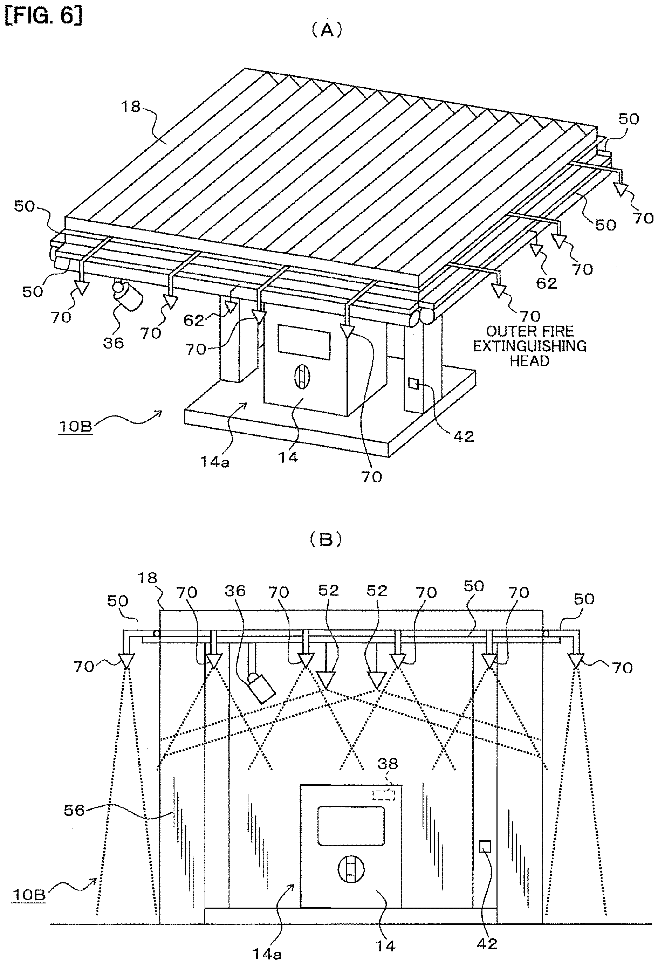

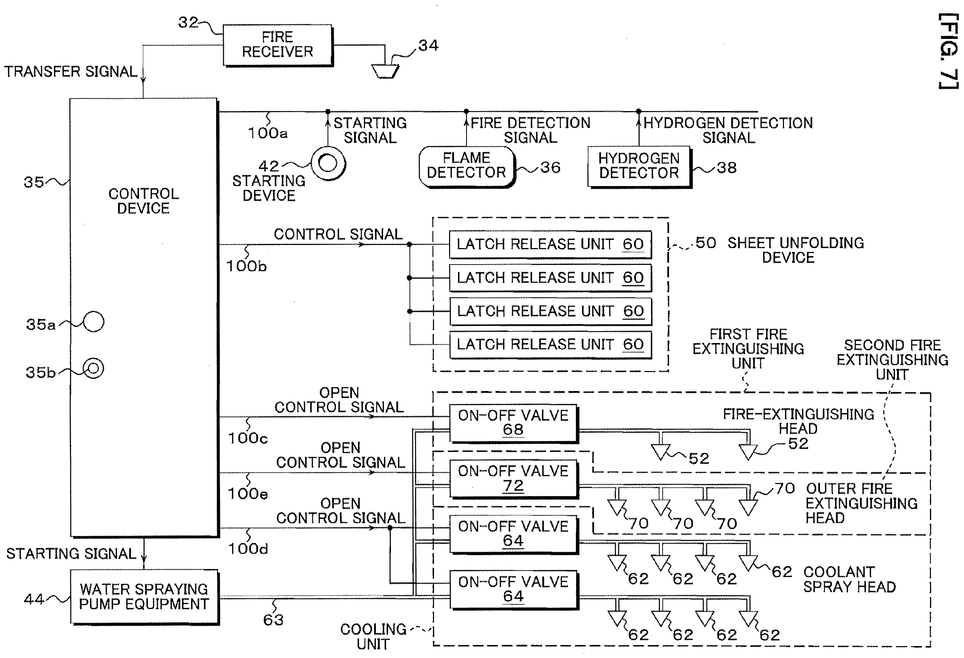

Figs. 6(A) and 6(B) are explanatory diagrams showing a second embodiment of disaster prevention equipment for the hydrogen station. Fig.6(A) shows a perspective view of the normal state, and Fig. 6(B) shows a front view of the operating state in which the sheet is seen through. Fig. 7 is an explanatory diagram showing the control system of the disaster prevention equipment of the hydrogen station shown in Figs. 6(A) and 6(B).

In Fig. 6(A), the feature of this embodiment is that, in addition to the features of the first embodiment described above, outer fire extinguishing heads 70 as a second fire extinguishing head are provided on the sheet unfolding devices 50 provided on the four sides of the roof 18 covering the dispenser 14.

In Fig. 7, the outer fire extinguishing head 70 is connected to the water supply pipe 63 via an on-off valve 72, and the on-off valve 72 is connected to a signal line 100 e from the control device 35. The on-off valve 72 and the outer fire extinguishing head 70 constitute a second fire extinguishing unit.

In the control operation of the disaster prevention equipment of the hydrogen station by the control device 35, presence/absence of spraying fire extinguishing water by the outer fire extinguishing head 70 is added to the hydrogen leak mode, fire occurrence mode, and peripheral mode by the control device 35 shown in Fig.4.

The hydrogen leakage mode control operation by the control device 35 is the same as in the first embodiment. In this case, spraying fire- extinguishing water to the outer perimeter of the protected area by the outer fire-extinguishing head 70 is not essential. However, if it is desired to further suppress diffusion of hydrogen to the surroundings, fire-extinguishing water may be sprayed from the outer fire-extinguishing head 70 as necessary.

Also, the control operation in the fire occurrence mode by the control device 35 sprays fire extinguishing water from the inner fire extinguishing head 52 in the same manner as in the first embodiment. In addition, as shown in Fig. 6(B), fire-extinguishing water is sprayed outside the partition sheet 56 from the outer fire-extinguishing head 70 to further improve the effect of preventing the spread of fire.

Further, as shown in Fig. 6(B), fire-extinguishing water is sprayed outside the partition sheet 56 from the outer fire-extinguishing head 70. Thus, the effect of preventing the spread of fire by blocking fire and heat on the protected area side will be further enhanced due to neighborhood fires that occur on public roads and premises in the neighborhood. Fire-extinguishing water may be sprayed from the inner fire-extinguishing head 52 if necessary.

Here, in this embodiment, the contents of control are the same for neighborhood fires and neighborhood accidents, but these may be changed as necessary.

### [Sheet reinforcement structure]

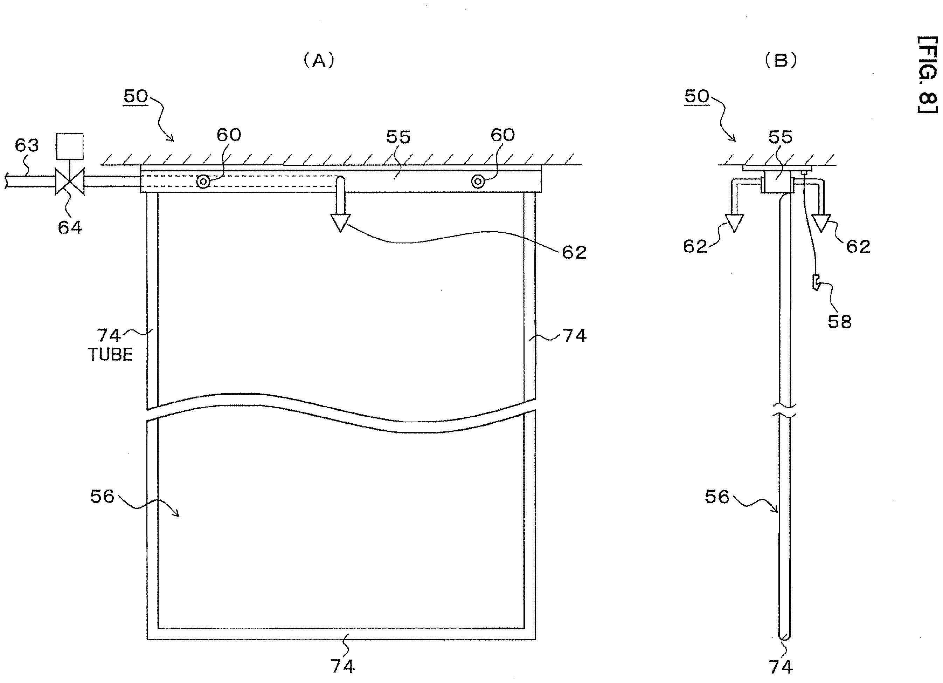

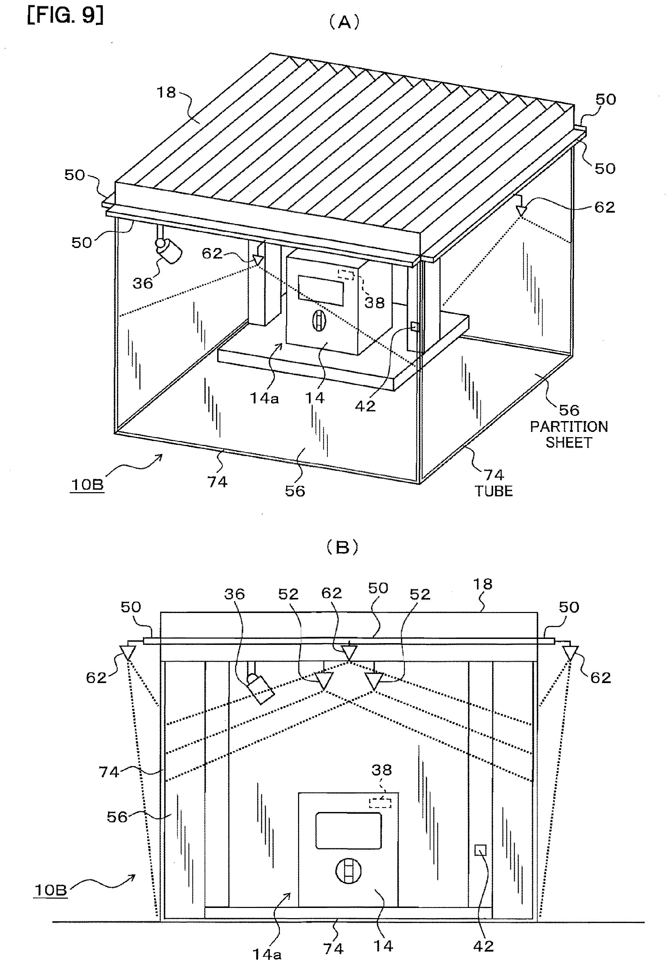

Figs 8(A) and 8(B) are explanatory diagrams showing the sheet unfolding device with a tube for filling water around the sheet in the unfolded state, Figs 9(A) and 9(B) is an explanatory diagram showing the operation of the disaster prevention equipment of the hydrogen station provided with the sheet unfolding device. Note that Fig. 9(A) shows a perspective view during operation, Fig. 9(B) shows a front view during operation, and the partition sheet is shown in a see-through state.

In Figs. 8(A) and 8(B), the partition sheet 56 is provided with tubes 74 along both sides and the bottom edge of the sheet. Accordingly, by opening the on-off valve 64 when the partition sheet 56 is unfolded, the tube 74 is filled with fire-extinguishing water supplied from the water supply pipe 63.

Here, it is more preferable that the timing for controlling the opening of the on-off valve 64 to start filling the tube 74 with water is at the time when the partition sheet 56 has almost finished falling. In this way, it is possible to prevent smooth deployment from being hindered due to the tubes on both sides of the partition sheet expanding sequentially from the upstream side of the water filling channel when water filling is started before the deployment is completed. Also, the water filling pressure can be relatively low.

In Figs. 9(A) and 9(B), the sheet unfolding device 50 is operated to fill the tube 74 of the partition sheet 56 unfolded around the protected area with fire extinguishing water. Therefore, in order to keep the partition sheet 56 in an unfolded state, a frame is formed to reinforce the partition sheet 56 by the weight and water pressure of the fire-fighting water filled in the tube 74. Accordingly, it is possible to reliably maintain the partition state by suppressing the partition sheet 56 from being turned up or moved by the wind. Note that the tubes 74 do not necessarily have to be provided on the three sides of the partition sheet 56. For example, only both edges of the partition sheet 56 may be used. Also, if an appropriate water filling route can be set, it may be provided only on the lower edge.

### [Upward spraying of fire extinguishing water]

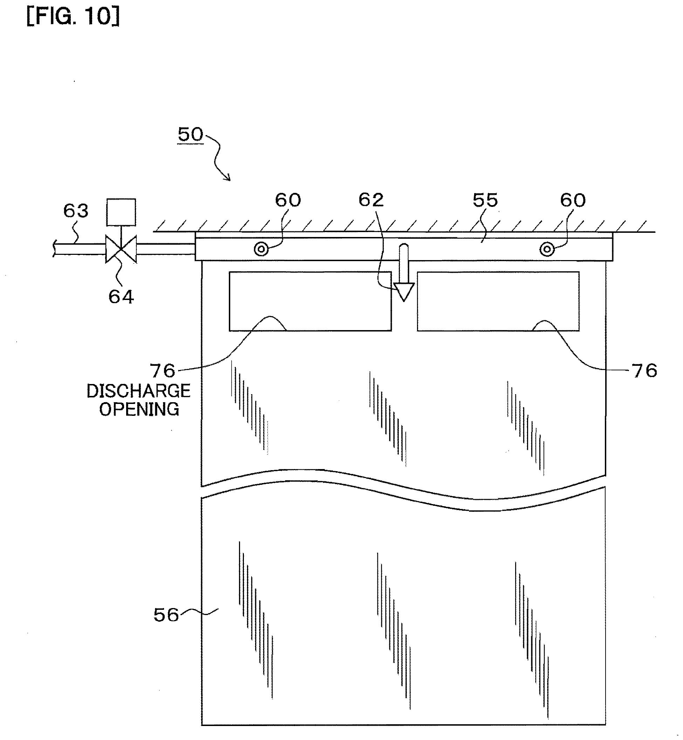

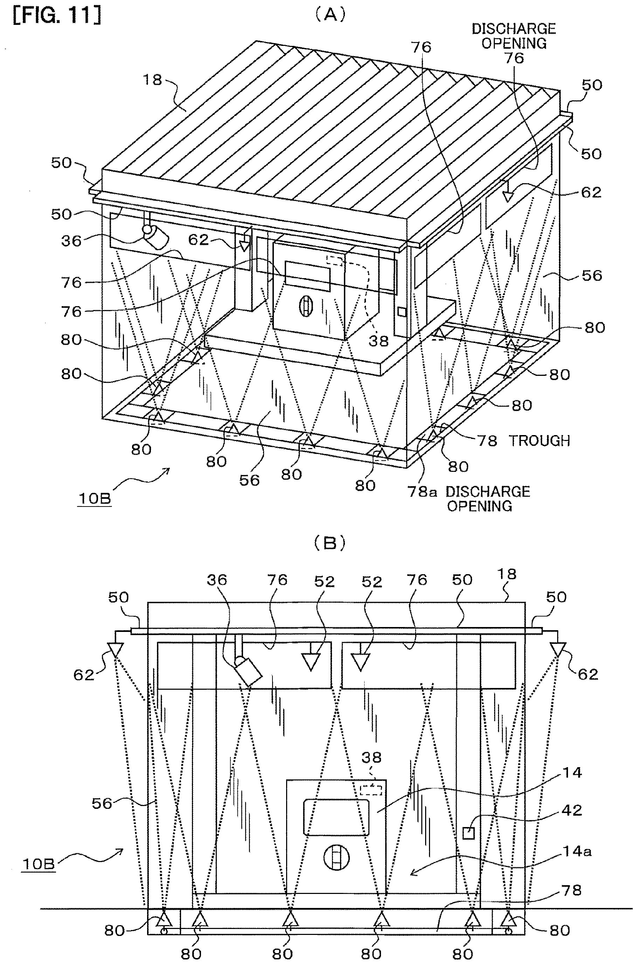

FIG. 10 is an explanatory view showing the sheet unfolding device having a discharge opening in the upper part of the sheet in the unfolded state. Fig. 11 (A) and (B) show the disaster prevention equipment of the hydrogen station in operation, in which a sheet unfolding device shown in Fig. 10 is provided and a fire extinguishing agent is sprayed upward from the upward spraying part as the leakage hydrogen emission enhancing agent when hydrogen leaks shown in Fig.5. Here, Fig. 11(A) shows a perspective view during operation, Fig. 11(B) shows a front view during operation, and further shows the partition sheet in a see-through state.

In Fig. 10, the partition sheet 56 provided in the sheet unfolding device 50 of the present embodiment is provided with a discharge opening 76 at the top of the sheet for discharging hydrogen leaked to the protected area when the partition sheet 56 is unfolded.

As shown in Figs. 11(A) and 11(B) in this embodiment, the upward spraying unit is arranged at a predetermined position on the bottom side within the protected area partitioned by the development of the partition sheet 56. Then, when hydrogen leaks from the protected area, the extinguishing agent is sprayed upward in the protected area. As an upward spraying unit, a plurality of spraying heads 80 are arranged upward on a water supply pipe laid in a trough 78 provided along the road surface (floor surface) at the periphery of the protected area. In this embodiment, the spray head 80 sprays fire extinguishing water upward into the protected area. A lattice lid is arranged at the opening of the trough 78, and a water discharge opening 78a is formed in the lattice lid arranged on the top of the sprinkling head 80. Moreover, the installation form of the spray head 80 is not limited to the above, for example, it may be embedded and installed facing upward on the floor in the protected area.

Therefore, when hydrogen leaks from the dispenser 14 in the protected area, fire- extinguishing water is sprayed upward in the protected area from the spray head 80 installed in the trough 78 provided on the lower peripheral edge of the protected area. The leaked hydrogen is carried on the airflow generated by the spraying of fire- extinguishing water from the spray head 80, and efficiently upwards from the ventilation structure of the roof 18 and the discharge opening 76 formed in the upper part of the partition sheet 56 that has been deployed. Therefore, the hydrogen is discharged and diffused into the sky to dilute it, making it possible to suppress and prevent the hydrogen explosion. At this time, the cooling agent may be sprayed on the partition sheet at the same time.

Here, the partition sheet 56 with the discharge openings 76 may be used with the other embodiments previously described.

Alternatively, or in addition to forming the discharge openings 76 in the partition sheet 56, the sheet unfolding device 50 may be provided slightly below the roof 18 so as to provide a discharge opening between the roof 18 and the sheet unfolding device 50.

### (Evacuation and dilution of leaking hydrogen by discharge promoting gas)

Here, as the leakage hydrogen emission enhancing agent in addition to or in place of fire extinguishing water, air, nitrogen, other inert gases, and mixed gases thereof (hereinafter referred to as " emission enhancing gas") may be adopted. In this case, unnecessary water damage can be prevented. Examples of the emission enhancing gas include nitrogen, IG-55 (mixed gas of 50% nitrogen and 50% argon), IG-541 (mixed gas of 52% nitrogen, 40% argon and 8% carbon dioxide). mentioned. IG-55 and IG-541 are also used as a fire extinguishing agent (fire extinguishing gas).

Also, in the case of a hydrogen leak, for example, when the leaked hydrogen concentration satisfies a predetermined first concentration condition, the emission enhancing gas is emitted upward from the spray head 80 to dilute the leaked hydrogen. Further, when the leaked hydrogen concentration satisfies the predetermined second concentration condition, the fire extinguishing head 52 may be switched to spray fire extinguishing water, or the fire extinguishing head 52 may additionally spray fire extinguishing water.

The predetermined first concentration condition is, for example, a concentration range in which hydrogen is leaking but the risk of ignition, ignition, or explosion is judged to be considerably low. The predetermined second concentration condition is, for example, a concentration range in which the risk of ignition, ignition, or explosion is determined to be higher than that in the first concentration condition. In addition to these conditions, factors such as the rate of increase in density and duration may be added for determination.

A control of the upward spraying unit by the control device according to the leakage hydrogen concentration is as follows. For example, when the hydrogen concentration detected by the hydrogen detector 38 reaches 25% LEL (Lower Explosion Limit), the control device 35 judges that the first concentration condition is satisfied and issues an alarm (alarm). Also, the partition sheet 56 is developed to partition the protected area. In addition, the leaking hydrogen is discharged by spraying the emission enhancing gas upwardly from the spray head 80 to dilute the leaking hydrogen. Then, when the hydrogen concentration further increases and the detected hydrogen concentration reaches 50% LEL, it is determined that the second concentration condition is satisfied, the upward spraying from the spraying head 80 is stopped, and the fire-extinguishing head 52 sprays fire-extinguishing water. Alternatively, both the emission enhancing gas and the fire extinguishing water may be sprayed to simultaneously dilute the emission of hydrogen gas and protect the space in the protected area and the object to be protected (for example, dispenser) in the protected area from cooling. Further, when the hydrogen concentration further increases and reaches, for example, 60 to 75% LEL, shutdown control of the hydrogen supply system of the hydrogen station is performed.

In this way, when the hydrogen concentration is low, the extinguishing agent is not sprayed and water damage can be prevented. In addition, if the concentration does not decrease as a result of diluting with the spraying of the emission enhancing gas, the spraying of the fire extinguishing agent can be switched to a more reliable protection.

It should be noted that the upward spray unit of this embodiment may be combined with other embodiments, for example, it can be combined with the embodiment shown in Fig.6(A) and 6(B) and the embodiment shown in Figs.9(A) and 9(B), and in each case, the configuration of the cooling unit in shown Figs.3(A) to 3(C) can be adopted.

### [Control of disaster prevention equipment]

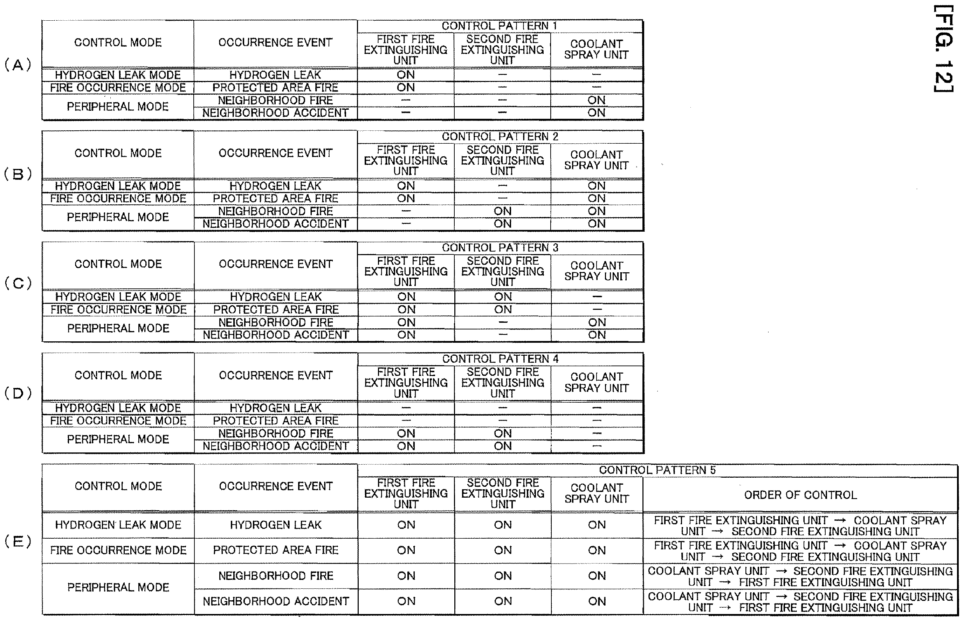

Figs. 12(A) to 12(E) are explanatory diagrams showing control patterns for an abnormal event of the disaster prevention equipment of the hydrogen station having the first fire extinguishing unit, the second fire extinguishing unit and the cooling unit shown in Fig. 7. Figure 12(A) to 12(E) divides the abnormal events that occur into hydrogen leaks, protected area fires, neighborhood fires, and neighborhood accidents. Also, the control of the first fire extinguishing unit, the second fire extinguishing unit, and the cooling unit for the occurrence of each abnormal event is divided into control patterns 1 to 5. Also, the case of controlling is set to "ON".

Here, as shown in Fig. 7, the first fire extinguishing unit is composed of the fire extinguishing head 52 and the opening/closing valve 68, the second fire extinguishing unit is composed of the outside installed fire extinguishing head 70 and the opening/closing valve 72, and the cooling unit is composed of a coolant spray head 62 and an on-off valve 64. It should be noted that the sheet unfolding device 50 operates on the occurrence of all abnormal events. In addition, the fuel leakage (before the fire) at the gasoline refueling station 10A is included in the neighborhood fire or neighborhood accident.

### (Control pattern 1)

Control pattern 1 in Fig. 12(A) is the minimum necessary control pattern for the first fire extinguishing part and the cooling part. In the event of a hydrogen leak or compartment fire, only the first fire extinguishing unit will operate. On the other hand, in the event of a neighborhood fire or neighborhood accident, only the cooling units are activated.

### (Control pattern 2)

Control pattern 2 in Fig. 12(B) is a control pattern for the first fire extinguishing unit, the second fire extinguishing unit, and the cooling unit. In case of hydrogen leakage or protected area fire, operate the first fire extinguishing unit and the cooling unit. On the other hand, when a neighborhood fire or a neighborhood accident occurs, the second fire extinguishing unit and the cooling unit are operated.

### (Control pattern 3)

Control pattern 3 in Fig. 12(C) is another control pattern for the first fire extinguishing unit, the second fire extinguishing unit, and the cooling unit. In the event of a hydrogen leak or protected area fire, the first and second fire extinguishing units are activated. On the other hand, when a neighborhood fire or a neighborhood accident occurs, the first fire extinguishing unit and the cooling unit are operated.

### (Control pattern 4)

Control pattern 4 in Fig. 12(D) is a control pattern for operating the first fire extinguishing unit and the second fire extinguishing unit when a nearby fire or accident occurs. In addition, the case where hydrogen leakage or protected area fire occurs is omitted, but one of the control patterns 1 to 3 is used.

### (Control pattern 5)

Control pattern 5 in Fig. 12(E) is a control pattern in which all of the first fire extinguishing unit, the second fire extinguishing unit, and the cooling unit are operated in response to the occurrence of all abnormal events. In addition to this, the order of operating the first extinguishing unit, the second extinguishing unit and the cooling unit, for hydrogen leakage or protected area fire, for example:
(First extinguishing unit) → (Cooling unit) → (Second extinguishing unit)

On the other hand, the order of operations for neighborhood fires or neighborhood accidents is, for example:
(Cooling unit) → (Second fire extinguishing unit) → (First extinguishing unit)

In any case, the partition sheet of the partition unit is first developed to form a partition surrounding the protected area.

The order of operations of the above units is an example, and other orders may be used, or any two or three operations may be performed simultaneously.

The control pattern for the abnormal event of the disaster prevention equipment for the hydrogen station having the first fire extinguishing unit and the cooling unit shown in Fig.4 is the control pattern excluding the second fire extinguishing unit from the control patterns 1 to 5 shown in Figs. 12(A) to 12(E).

### [Modification of the present invention]

### (Formation of multiple partitioned area)

By developing the partition sheet, the formation of the partition unit that partitions the protected area including the dispenser installation area, which is the object to be protected, may be partitioned so as to surround the protected area doubly. In this case, the intermediate area between the inner partition and the outer partition may be treated as a protected area or outside the protected area.

In addition, when forming partitions that enclose three or more layers, regarding the intermediate area between the two or more layers other than the innermost unit, whether to treat part or all of it as a protected area or outside the protected area can be selected according to the system, operation mode, and other circumstances.

### (Fire extinguishing agents for the first and second fire extinguishing units)

The fire-extinguishing unit (first fire-extinguishing unit) and the second fire-extinguishing unit of the above-described embodiment show an example in which fire-extinguishing water is sprayed as the extinguishing agent. Additionally, as with the upward sprayer embodiment, spraying of the leakage hydrogen emission enhancing gas (eg, IG-55, IG-541) may be combined as the leakage hydrogen emission enhancing agent.

For example, when a hydrogen leak occurs, if the concentration of the leaked hydrogen satisfies a predetermined third concentration condition, any one of the above gases is emitted upward from the spray head 80 to dilute the leaked hydrogen. Further, when a predetermined fourth concentration condition is satisfied, the switch may be switched to the spraying of fire-extinguishing water, or the spraying of fire-extinguishing water may be added.

The predetermined third concentration condition is, for example, a concentration range in which hydrogen is leaking but the risk of ignition, ignition, or explosion is judged to be considerably low. The predetermined fourth concentration condition is, for example, a concentration range in which the risk of ignition, ignition, or explosion is determined to be higher than that in the third concentration condition. In addition to these conditions, factors such as the rate of increase in density and duration may be added for determination.

For example, the control of the extinguishing unit by the control device 35 according to the leakage hydrogen concentration may be performed as follows. In the case of the fire extinguishing unit (first fire extinguishing unit), the control device 35 determines that the third concentration condition is satisfied and issues an alarm (alarm) when the hydrogen concentration detected by the hydrogen detector 30 reaches 25% LEL. In addition to this, the partition sheet 56 is developed to partition the protected area, and the fire extinguishing gas is sprayed from the extinguishing head 52 to discharge and dilute the leaked hydrogen. Then, when the hydrogen concentration further increases and the detected hydrogen concentration reaches 50% LEL, it is determined that the fourth concentration condition is satisfied, and the spraying from the fire extinguishing head 52 is switched to the spraying of fire extinguishing water, or fire extinguishing gas and fire- extinguishing water. As a result, dilution by hydrogen discharge and cooling protection of the space in the protected area and the object to be protected (for example, dispenser) in the protected area are performed at the same time.

In this way, when the concentration of hydrogen is low, fire- extinguishing water is not sprayed and water damage can be prevented. In addition, if the concentration does not decrease as a result of diluting with the spraying of the leakage hydrogen emission enhancing gas, spraying the extinguishing agent will switch to a more reliable protection. The same can be applied to the second fire extinguishing unit.

### (Concentration condition)

The first density condition and the third density condition shown in the above embodiments may be the same or different. The same applies to the second density condition and the fourth density condition.

Further, the hydrogen concentration numerical values for each concentration condition shown in the above embodiment are examples, and the present invention is not limited to these numerical values.

### (Hydrogen detection signal)

The hydrogen detection signal from the hydrogen detector 38 may be a signal indicating that a predetermined concentration has been reached, or may indicate the detected hydrogen concentration. In the latter case, the control device 35 determines whether or not the concentration has reached the predetermined level.

### (Hydrogen station)

Although the above-described embodiment is an example of the hydrogen station installed side by side with the refueling station such as gasoline, it is not limited to this, and can be similarly applied to a stand-alone hydrogen station.

Moreover, although the above-described embodiment takes an example of an on-site hydrogen station equipped with a hydrogen production facility, it is not limited to this, and the same applies to an off-site hydrogen station that does not have a hydrogen production facility.

### (Sheet unfolding device)

The above embodiment takes as an example the case where a plurality of sheet unfolding devices are arranged around the periphery of the roof that covers the upper portion of the dispenser. On the other hand, if the partition sheet can be unfolded so as to surround the protected area including the dispenser setting area, the sheet unfolding device can be arranged arbitrarily as necessary.

If the width of the protected area is long, place multiple sheet unfolding devices side by side. In this case, a plurality of sheet unfolding devices are arranged side by side so that the adjacent partition sheets overlap at the ends to close the gap.

### (Other combinations of embodiments)

In addition to the combinations of the embodiments described above, the present invention includes appropriate combinations that do not impair the objects and advantages thereof.

### (Others)

Also, the present invention includes suitable modifications without impairing its objects and advantages, for example, the fire extinguishing water can be replaced with fire extinguishing foam, powder fire extinguishing agent.

Furthermore, the present invention is not limited by the numerical values shown in the above embodiments.

### [List of Reference Numbers]

10: hydrogen station
10A: gasoline refueling station
10B: hydrogen station
10C: hydrogen production area
11,15: firewall
12: fixed refueling equipment
12a: refueling station
13: fixed oil supply equipment
13a: oil supply stand
14: dispenser
14a: dispenser installation area
16,18: roof
20: hydrogen raw material storage tank
22: hydrogen production equipment
24: compressor
25: storage equipment
26: office
32: fire receiver
34: fire detector
35: control device
36: flame detector
38: hydrogen detector
40: temperature sensor
42: starting device
44: water spray pump equipment
46: emergency power supply equipment
48: water spray head
50: sheet unfolding device
52: fire extinguishing head
55: device body
56: partition sheet
57: seat fixing unit
58: holding member
60: latch release unit
62: coolant spraying head
63: water supply pipe
64,68,72: on-off valve
70: outside installation fire extinguishing head
74: tube
76: hydrogen release opening
78: trough
80: spray head

## Claims

1. A disaster prevention equipment for a hydrogen station comprising:
a partition unit that encloses and partitions a predetermined protected area including an installation area of a dispenser that supplies hydrogen to a vehicle upon a predetermined abnormal event occurs;
a first fire extinguishing unit that sprays a fire extinguishing agent in the protected section partitioned by the partition unit.

2. According to the disaster prevention equipment in claim 1, wherein the first fire extinguishing unit sprays a fire extinguishing agent in the predetermined protected area upon hydrogen leakage or fire occurs in the predetermined protected area as the predetermined abnormal event.

3. According to the disaster prevention equipment in claim 1, further comprising:
a cooling unit that sprays a cooling agent to the partition unit that separates the predetermined protected area.

4. According to the disaster prevention equipment in claim 3, upon any of hydrogen leakage, fire, neighborhood fire or neighborhood accident in the predetermined protected area occurs as the predetermined abnormal event, the first fire extinguishing unit sprays fire extinguishing agent in the predetermined protected area, and the cooling unit cools the partition unit by spraying the cooling agent.

5. According to the disaster prevention equipment in claim 3, wherein upon any of hydrogen leakage, fire, neighborhood fire, or neighborhood accident in the predetermined protected area occurs as the predetermined abnormal event, the cooling unit sprays the cooling agent to cool the partition unit.

6. According to the disaster prevention equipment in claim 3, wherein the fire extinguishing agent and the cooling agent are each used as fire extinguishing water.

7. According to the disaster prevention equipment in claim 1, further comprising a second fire extinguishing unit that sprays a fire extinguishing agent outside the predetermined protected area partitioned by the partition unit.

8. According to the disaster prevention equipment in claim 7, wherein upon any of hydrogen leakage, fire, neighborhood fire, or neighborhood accident in the predetermined protected area occurs as the predetermined abnormal event, the first fire extinguishing unit sprays extinguishing agent in the predetermined protected area, and the second fire extinguishing unit sprays extinguishing agent outside the predetermined protected area.

9. According to the disaster prevention equipment in claim 1, further comprising;
a cooling unit that sprays a cooling agent to the partition unit that separates the predetermined protected area, and
a second fire extinguishing unit that sprays a fire extinguishing agent outside the predetermined protected area partitioned by the partition unit.

10. According to the disaster prevention equipment in claim 9, wherein upon either a neighborhood fire or a neighborhood accident in the predetermined protected area occurs as the predetermined abnormal event, the second fire extinguishing unit sprays fire extinguishing agent on the outside of said predetermined protected area, and the cooling unit sprays cooling agent on the partition unit for cooling.

11. According to the disaster prevention equipment in claim 9, wherein upon any of hydrogen leakage in the predetermined protected area, fire, neighborhood fire, or neighborhood accident occurs as the predetermined abnormal event, the first fire extinguishing unit sprays extinguishing agent in the predetermined protected area, and the second fire extinguishing unit sprays fire extinguishing agent outside the predetermined protected area, and the cooling unit sprays cooling agent on the partition unit for cooling.

12. According to the disaster prevention equipment in claim 9, wherein the fire extinguishing agent and the cooling agent are each used as fire extinguishing water.

13. According to the disaster prevention equipment in claim 1,
further comprising an upward spraying unit,
wherein upon hydrogen leakage in the predetermined protected area occurs as the predetermined abnormal event, the upward spraying unit sprays a predetermined leakage hydrogen emission enhancing agent from the bottom to the top of the space in the predetermined protected area.

14. According to the disaster prevention equipment in claim 11, wherein upon the concentration of leaked hydrogen satisfies a predetermined first concentration condition, spraying the leakage hydrogen emission enhancing agent from an upward spraying unit into the predetermined protected area; upon the concentration of the leaked hydrogen satisfies a predetermined second concentration condition that is higher than the first concentration condition, stop spraying the leakage hydrogen emission enhancing agent from the upward spraying unit, or spray the extinguishing agent from the first fire extinguishing unit into the predetermined protected area without stopping spraying the leakage hydrogen emission enhancing agent from the upward spraying unit.

15. According to the disaster prevention equipment in claim 1, wherein the partition unit normally holds a partition sheet in a non-deployed state, and upon any of the hydrogen leakage, the compartment fire, the neighborhood fire, or the neighborhood accident occurs as the predetermined abnormal event, the partition sheet release the hold and deploy downward.

16. According to the disaster prevention equipment in claim 15, wherein the partition sheet is arranged to provide a discharge opening above the predetermined protected area when unfolded.

17. According to the disaster prevention equipment in claim 15, wherein the partition sheet has fire resistance, fire resistance or heat resistance.

18. According to the disaster prevention equipment in claim 17, wherein the partition sheet also has heat, smoke or flame barrier properties.

19. According to the disaster prevention equipment in claim 15, wherein the partition sheet is in the form of cloth.

20. According to the disaster prevention equipment in claim 15,
wherein the partition sheet is provided with a tube along the sheet side edge and/or the sheet bottom edge, and
wherein during or after the partition sheet is deployed, the tubes are filled with water to reinforce the partition sheet.

21. According to the disaster prevention equipment in claim 1,
wherein the first fire extinguishing unit has a unit that sprays either or both of a predetermined leakage hydrogen emission enhancing agent or the fire extinguishing agent in the predetermined protected area,
wherein upon hydrogen leakage in the predetermined protected area occurs as the predetermined abnormal event, the leakage hydrogen emission enhancing agent is discharged from the first fire extinguishing unit into the predetermined protected area when the leaked hydrogen concentration satisfies a predetermined third concentration condition, and
wherein upon the leaked hydrogen concentration satisfies a predetermined fourth concentration condition higher than the third concentration condition, the extinguishing agent or the extinguishing agent and the leakage hydrogen emission enhancing agent are discharged from the first fire extinguishing unit into the predetermined protected area.

22. According to the disaster prevention equipment in claim 21, further comprising a second fire extinguishing unit that sprays either one or both of the leakage hydrogen emission enhancing agent and the fire extinguishing agent outside the predetermined protected area partitioned by the partition unit,
wherein upon hydrogen leakage in the predetermined protected area occurs as the predetermined abnormal event and the leaked hydrogen concentration satisfies a predetermined third concentration condition, the leakage hydrogen emission enhancing agent is discharged from the second fire extinguishing unit to the outside of the predetermined protected area, and
wherein upon the leakage hydrogen concentration satisfies a predetermined fourth concentration condition that is higher than the third concentration condition, the fire extinguishing agent or the extinguishing agent and the leakage hydrogen emission enhancing agent are sprayed outside the predetermined protected area from the second fire extinguishing unit.
